# EUROPEAN PATENT APPLICATION

(11) **EP 2 890 093 A1**
(43) Date of publication of application: **01.07.2015**
(21) Application number: 12883299.5
(22) Date of filing: 24.08.2012
(51) Int. Cl.: H04M 1/00, B60R 16/02, G06F 3/02

(54) **PORTABLE TERMINAL DEVICE, METHOD FOR CONTROLLING PORTABLE TERMINAL DEVICE, PROGRAM EXECUTED BY PORTABLE TERMINAL DEVICE, AND CARDLE FOR PORTABLE TERMINAL DEVICE**

(71) Applicant: Toyota Jidosha Kabushiki Kaisha, Toyota-shi, Aichi 471-8571 (JP)
(72) Inventor: TSUNODA, Seiichi, Toyota-shi Aichi 471-8571 (JP); ISOGAI, Daiki, Toyota-shi Aichi 471-8571 (JP); KATO, Yasutomo, Toyota-shi Aichi 471-8571 (JP)
(74) Representative: Kuhnen & Wacker
(86) International application number: PCT/JP2012/071513
(87) International publication number: WO 2014/030263

(57) **Abstract**

A portable terminal includes a control device that inhibits reception of an operator's operation input to a home button until coupling of the portable terminal to an onboard device is intercepted when the portable terminal is coupled to the onboard device an predetermined application software is operating in the portable terminal. The predetermined application software transmits details of the operator's operation input to a touch panel of the portable terminal to application software that is operating in the onboard device so as to control a screen displayed on an onboard display.

## Description

### TECHNICAL FIELD

The present invention relates to a portable terminal, a control method of the portable terminal, a program that is executed in the portable terminal, and a cradle for the portable terminal.

### BACKGROUND ART

In the related art, an onboard communication system is known in which a portable terminal carried in a vehicle interior is coupled to an onboard device via a near-field communication line (for example, see Patent Literature 1).

In the onboard communication system, an occupant can operate the portable terminal through the use of the onboard device in a state in which the portable terminal and the onboard device are coupled to each other via a near-field communication line. The onboard communication system inhibits an occupant's operations of the portable terminal from being received when a vehicle travels in order to secure safety.

### CITATION LIST

### Patent Literature

Patent Literature 1: Japanese Patent Application Publication No. 2005-53384

### SUMMARY OF THE INVENTION

### TECHNICAL PROBLEM

However, Patent Literature 1 does not mention use of the portable terminal instead of the onboard device or use of the portable terminal as an operation input device for operating the onboard device.

In consideration of the aforementioned circumstances, an object of the invention is to provide a portable terminal that is used instead of an onboard device or as an operation input device for operating the onboard device, a control method of the portable terminal, a program that is executed in the portable terminal, and a cradle for the portable terminal.

### SOLUTION TO PROBLEM

In order to achieve the aforementioned object, a portable terminal according to an embodiment of the invention includes a control device that inhibits reception of an operator's operation input to a home button until coupling to an onboard device is intercepted when the portable terminal is coupled to the onboard device and predetermined application software is operating.

A control method of a portable terminal according to an embodiment of the invention includes a step of inhibiting reception of an operator's operation input to a home button until coupling of the portable terminal to an onboard device is intercepted when the portable terminal is coupled to the onboard device and predetermined application software is operating in the portable terminal.

A program which is executed in a portable terminal according to an embodiment of the invention causes a computer to execute a step of inhibiting reception of an operator's operation input to a home button until coupling of the portable terminal to an onboard device is intercepted when the portable terminal is coupled to the onboard device and predetermined application software is operating in the portable terminal.

A cradle for a portable terminal according to an embodiment of the invention is a cradle for a portable terminal that is disposed in a vehicle interior and includes a guide portion that covers a home button of the portable terminal when the portable terminal is attached to the cradle.

### EFFECTS OF THE INVENTION

According to the aforementioned configurations, the invention can provide a portable terminal that is used instead of an onboard device or as an operation input device for operating the onboard device, a control method of the portable terminal, a program that is executed in the portable terminal, and a cradle for the portable terminal.

### BRIEF DESCRIPTION OF THE DRAWINGS

[FIG. 1] FIG. 1 is a functional block diagram illustrating a configuration example of a portable terminal according to an embodiment of the invention.
[FIG. 2] FIG. 2 is a front view of the portable terminal illustrated in FIG. 1.
[FIG. 3] FIG. 3 is a diagram illustrating a vehicle interior when the portable terminal illustrated in FIG 1 is attached to a dock on a dashboard.
[FIG. 4] FIG. 4 is a flowchart illustrating a flow of a first operation input reception inhibiting process.
[FIG. 5] FIG. 5 is a functional block diagram illustrating a configuration example of another portable terminal according to an embodiment of the invention.
[FIG. 6] FIG. 6 is a diagram illustrating a vehicle interior when the portable terminal illustrated in FIG 5 is attached to a dock on a dashboard.
[FIG. 7] FIG. 7 is a flowchart illustrating a flow of a second operation input reception inhibiting process.

### MODES FOR CARRYING OUT THE INVENTION

Hereinafter, an embodiment of the invention will be described with reference to the accompanying drawings.

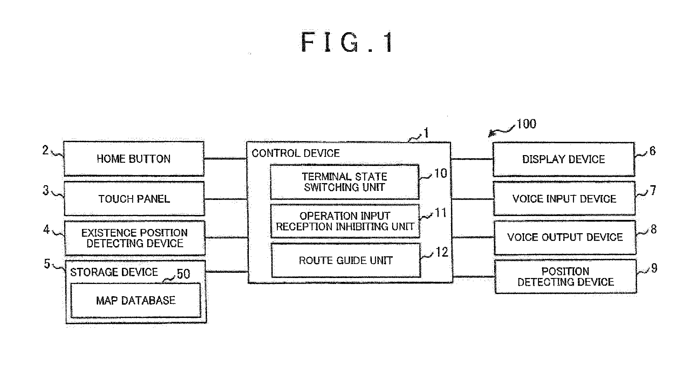

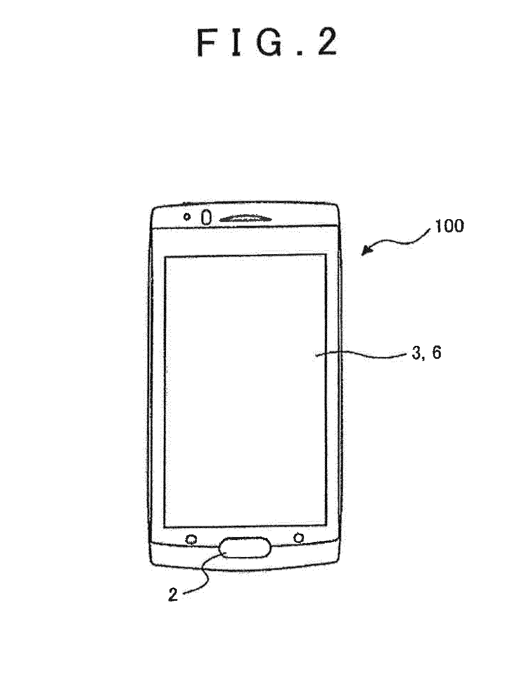

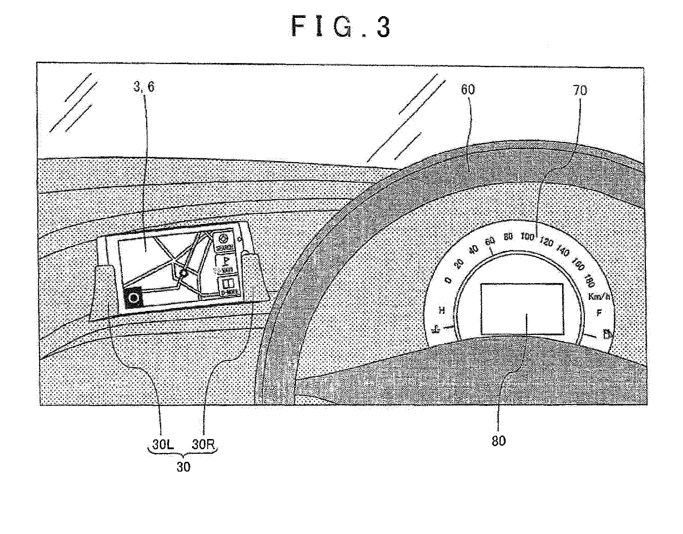

FIG.1 is a functional block diagram illustrating a configuration example of a portable terminal 100 according to an embodiment of the invention. FIG. 2 is a front view of the portable terminal 100. FIG. 3 is a diagram illustrating a vehicle interior when the portable terminal 100 is attached to a cradle 30 (hereinafter, referred to as a "dock") for a portable terminal on a dashboard.

The portable terminal 100 is a terminal that is carried by an occupant and examples thereof include a mobile phone, a smart phone, a personal digital assistance (PDA), a portable game machine, and a tablet computer.

In this embodiment, the portable terminal 100 is a smart phone and includes a control device 1, a home button 2, a touch panel 3, an existence position detecting device 4, a storage device 5, a display device 6, a voice input device 7, a voice output device 8, and a position detecting device 9.

The control device 1 is a device that controls the portable terminal 100 and is a computer including a central processing unit (CPU), a random access memory (RAM), and a read only memory (ROM) in this embodiment. For example, the control device 1 reads programs corresponding to functional elements of a terminal state switching unit 10, an operation input reception inhibiting unit 11, and a route guide unit 12 from the ROM, loads the read programs into the RAM, and causes the CPU to perform processes corresponding to the functional elements. The programs corresponding to the functional elements may be downloaded through a communication network or may be provided in a state in which the programs are recorded on a recording medium.

The home button 2 is one operation input device mounted on the portable terminal 100 and performs a predetermined function in response to an operator's operation input. The predetermined function is, for example, a function of stopping a screen associated with application software (hereinafter, referred to as "APP") that is currently executed by the portable terminal 100. In this embodiment, the predetermined function is a homing function of returning the screen associated with the APP that is currently executed by the portable terminal 100 to a home screen (initial screen) of the portable terminal 100. The homing function may be used to stop the process of the APP that is currently executed by the portable terminal 100 or to continuously perform the process in the background. The predetermined function may be, for example, a power supply turning-off function of turning off a power supply of the portable terminal 100.

In this embodiment, the home button 2 is a hardware button that is installed in the lower part of the case surface of the portable terminal 100 as illustrated in FIG 2. Here, the home button 2 may be realized using another operation input device. For example, the home button 2 may be a software button that is determined as an area on a touch panel 3 corresponding to a button image displayed on the display device 6.

The touch panel 3 is one operation input device mounted on the portable terminal 100 and is, for example, a touch panel that is disposed on the display device 6 so as to support a multi touch gesture function.

The existence position detecting device 4 is a device for detecting that the portable terminal 100 exists in a predetermined area in the vehicle interior. In this embodiment, the existence position detecting device 4 is an RFID reader which detects that the portable terminal 100 exists in the dock 30 by reading an RFID tag attached to the dock 30. The RFID reader as the existence position detecting device 4 outputs the detection result thereof to the control device 1.

The existence position detecting device 4 may be a switch such as a hardware switch, a magnetic switch, and a proximate switch in which the ON and OFF states thereof are switched when the portable terminal 100 is attached to the dock 30. For example, a hardware button as the existence position detecting device 4 detects that the portable terminal 100 exists in the dock 30 when it is pressed into the ON state by a protrusion in the dock 30. The hardware button outputs the detection result thereof to the control device 1.

The existence position detecting device 4 may be a communication device that starts communication with the onboard device when the portable terminal 100 is attached to the dock 30. In this case, the communication device as the existence position detecting device 4 detects that the portable terminal 100 exists in the dock 30 when the communication with the onboard device is started. Then, the communication device outputs the detection result to the control device 1.

The storage device 5 is a device for storing a variety of information and includes a nonvolatile semiconductor memory such as a flash memory. In this embodiment, the storage device 5 stores a map database 50. The map database 50 is a database in which node positions such as intersections and interchanges, distances of links which are elements connecting nodes, link costs which are degrees of time, cost, and the like required for passing through the links, facility positions (latitude, longitude, and altitude), facility names, and the like are systematically stored.

The display device 6 is a device for displaying a variety of information and is, for example, a liquid crystal display. The voice input device 7 is a device for inputting voice and is, for example, a microphone. The voice output device 8 is a device for outputting a variety of information by voice and is, for example, a speaker.

The position detecting device 9 is a device for detecting the position of the portable terminal 100. In this embodiment, the position detecting device 9 is a global positioning system (GPS) receiver that receives GPS signals output from GPS satellites via GPS antennas. The position detecting device 9 detects the position (latitude, longitude, and altitude) of the portable terminal 100 on the basis of the received GPS signals and outputs the detection result to the control device 1.

Various functional elements of the control device 1 will be described below.

The terminal state switching unit 10 is a functional element that switches the state of the portable terminal 100 and switches the state between a state in which the operator's operation input to a predetermined operation input device is received (hereinafter, referred to as "reception-enabled state") and a state in which the operation input is not received (hereinafter, referred to as "reception-disabled state").

In this embodiment, the terminal state switching unit 10 switches the state between a state in which the operator's operation input to the home button 2 is received and a state in which the operation input is not received on the basis of the output of the existence position detecting device 4.

The terminal state switching unit 10 switches the state of the portable terminal 100 to the reception-disabled state when the existence position detecting device 4 detects that the portable terminal 100 exists in the dock 30 and a predetermined APP is operating. On the other hand, the terminal state switching unit 10 switches the state of the portable terminal 100 to the reception-enabled state when the existence position detecting device 4 detects that the portable terminal 100 does not exist in the dock 30 or when the predetermined APP does not operate.

The predetermined APP is an APP that is operating in the portable terminal 100 and includes, for example, an operation input APP associated with an operation input, particularly, includes a touch gesture recognition APP for recognizing various touch gestures. The touch gesture is an act for inputting an operation on the touch panel 3 using a finger or the like and examples thereof include a tap, a double tap, a drag, a swipe, a zoom-in, and a zoom-out.

The predetermined APP may be an integrated APP such as a navigation APP in which operation input APPs associated with operation inputs such as a touch gesture recognition APP are integrated. In this example, the predetermined APP is a navigation APP with which the touch gesture recognition APP for recognizing the operator's touch gestures on the touch panel 3 is integrated.

It is preferable that the predetermined APP be automatically started when it is detected that the portable terminal 100 exists in the dock 30. Here, the predetermined APP may be manually started. When the predetermined APP is manually started and it is detected that the portable terminal 100 exists in the dock 30, starting of an APP other than the predetermined APP may be permitted.

When the existence position detecting device 4 detects that the portable terminal 100 exists in the dock 30, the terminal state switching unit 10 may switch the state of the portable terminal 100 to the reception-disabled state regardless of whether the predetermined APP is operating. In this case, even when the navigation APP does not operate, the control device 1 inhibits reception of the operator's operation input to the home button 2 as long as the portable terminal 100 exists in the dock 30.

The operation input reception inhibiting unit 11 is a functional element of inhibiting reception of the operator's operation input to a predetermined operation input device and inhibits reception of the operator's operation input to the predetermined operation input device, for example, when the portable terminal 100 is in the reception-disabled state.

In this embodiment, the operation input reception inhibiting unit 11 inhibits reception of the operator's operation input to the home button 2 when the portable terminal 100 is in the reception-disabled state.

Specifically, the operation input reception inhibiting unit 11 inhibits execution of a predetermined function corresponding to the home button 2 when the portable terminal 100 is in the reception-disabled state and the home button 2 is pushed.

The operation input reception inhibiting unit 11 may inhibit the reception of the operator's operation input to an operation input device for starting an APP which should not be executed during traveling.

Even when the reception of the operator's operation input to a predetermined operation input device is inhibited, the control device 1 does not inhibit the reception of the operator's operation input to an operation input device other than the predetermined operation input device. For example, the control device 1 receives the operator's operation input to the touch panel 3 and performs various functions such as enlargement or reduction in display of the navigation APP and scrolling, even when the reception of the operator's operation input to the home button 2 is inhibited.

The route guide unit 12 is a functional element for guiding a route up to a predetermined position and executes, for example, the navigation APP. In this embodiment, the route guide unit 12 executes the navigation APP and derives an optimal route from a current position to a destination on the basis of the current position detected by the position detecting device 9, the position of the destination input through the use of the touch panel 3, and the map information database stored in the storage device 5.

The route guide unit 12 searches for the shortest route, for example, using a Dijkstra's algorithm as a shortest route search algorithm. The route guide unit 12 may search for the highest-speed route through which the vehicle can reach the destination most rapidly or a route not using a highway, in addition to the shortest route.

The route guide unit 12 displays the searched recommended routes on the display device 6 so as to be distinguished from other routes and allows the operator to easily check the recommended route and outputs voice guidance from the voice output device 8 so as to support the operator while driving.

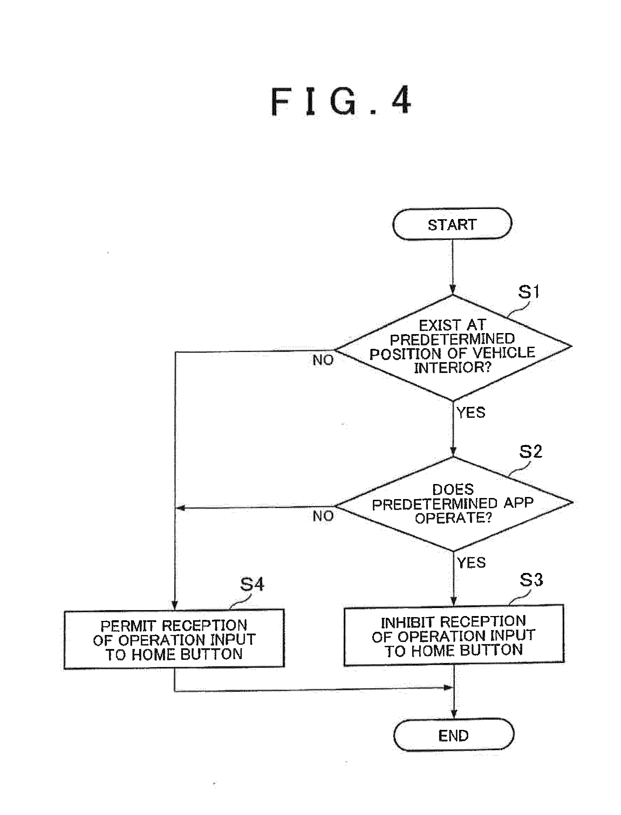

A process (hereinafter, referred to as "first operation input reception inhibiting process") of causing the portable terminal 100 to inhibit reception of the operator's operation input to a predetermined operation input device will be described below with reference to FIG. 4. FIG. 4 is a flowchart illustrating a flow of the first operation input reception inhibiting process. The portable device 100 repeatedly performs the first operation input reception inhibiting process for each predetermined cycle.

First, the control device 1 of the portable terminal 100 determines whether the portable terminal 100 exists at a predetermined position in the vehicle interior (step S1). In this embodiment, the control device 1 determines that the portable terminal 100 exists in the dock 30 when the hardware button as the existence position detecting device 4 mounted on the portable terminal 100 is in the ON state. On the other hand, when the hardware button is in the OFF state, the control device 1 determines that the portable terminal 100 does not exist in the dock 30.

FIG. 3 is a diagram illustrating a state in which the portable terminal 100 is attached to the dock 30. FIG. 3 illustrates a state in which the portable terminal 100 is supported at a predetermined position by a right guide portion 30R and a left guide portion 30L of the dock 30. The right guide portion 30R and the left guide portion 30L are formed of, for example, a resin material. Preferably, the right guide portion 30R and the left guide portion 30L are formed of the same material as the dashboard. The right guide portion 30R and the left guide portion 30L may be formed so as to be integrated with the dashboard. The portable terminal 100 is attached to the dock 30 by causing the top end and the bottom end thereof to slide along inner guide grooves (not illustrated) in the right guide portion 30R and the left guide portion 30L form the upper side of the dock 30.

The portable terminal 100 is supported by the dock 30 in a state in which the touch panel 3 and the display device 6 thereof face the driver side. The portable terminal 100 is supported by the dock 30 in a transversely-mounted state, that is, in a state in which the long sides thereof are transverse. The right guide portion 30R and the left guide portion 30L are configured to satisfactorily support the portable terminal 100 and to expose the touch panel 3 and the display device 6 as much as possible. In this embodiment, the right guide portion 30R and the left guide portion 30L extend along the short sides of the portable terminal 100 up to a height of 2/3 of the short sides so as not to cover the touch panel 3 and the display device 6. In this case, the home button 2 is covered with the right guide portion 30R and cannot be pushed by the driver. The home button 2 may be exposed in a state in which the portable terminal 100 is supported by the dock 30.

The dock 30 may include a locking mechanism (not illustrated) such as a snap-fit mechanism that can prevent the portable terminal 100 from being dropped or detached during traveling and that can easily detach the portable terminal 100 from the dock 30 at the time of leaving the vehicle. The dock 30 may have a function of preventing the portable terminal 100 from being attached in an inverted state in the vertical direction or the horizontal direction. For example, the dock 30 may be a shape-adaptable type that accepts only the portable terminal 100 facing a predetermined direction and does not accept the portable terminal 100 facing other directions.

By employing this configuration, the driver can stretch the hand grasping a steering wheel 60 and can perform an operation input to the touch panel 3. The driver can visually recognize the display device 6 displaying navigation information, a speedometer 70, and a multi-information display 80 displaying a communication state of the portable terminal 100, a battery state, and the like, if necessary, during driving.

When it is determined that the portable terminal 100 exists at the predetermined position in the vehicle interior (YES in step S1), the control device 1 determines whether a predetermined APP is operating in the portable terminal 100 (step S2). In this embodiment, the control device 1 determines whether the navigation APP is operating in the portable terminal 100. FIG. 3 illustrates a state in which the navigation APP is operating in the portable terminal 100.

When it is determined that the predetermined APP is operating (YES in step S2), the terminal state switching unit 10 switches the state of the portable terminal 100 to the reception-disabled state, that is, the state in which the operator's operation input to the home button 2 is not received (step S3). In this case, the operation input reception inhibiting unit 11 inhibits execution of the predetermined function corresponding to the home button 2 even when the home button 2 is pushed.

On the other hand, when it is determined that the predetermined APP does not operate (NO in step S2), the terminal state switching unit 10 switches the sate of the portable terminal 100 to the reception-enabled state, that is, the state in which the operator's operation input to the home button 2 is received (step S4). In this case, the operation input reception inhibiting unit 11 permits execution of the predetermined function corresponding to the home button 2 when the home button 2 is pushed. The terminal state switching unit 10 maintains the reception-enabled state when the state of the portable terminal 100 is already the reception-enabled state.

When it is determined that the portable terminal 100 does not exist at the predetermined position in the vehicle interior (NO in step S1), the control device 1 similarly switches the state of the portable terminal 100 to the reception-enabled state (step S4). In this case, the terminal state switching unit 10 maintains the reception-enabled state when the state of the portable terminal 100 is already the reception-enabled state.

The order of step S1 and step S2 is not limited and the control device 1 may determine whether the portable terminal 100 exists at the predetermined position in the vehicle interior after determining that the predetermined APP is operating, or may simultaneously perform two determinations.

When it is determined that the portable terminal 100 exists at the predetermined position in the vehicle interior, the control device 1 may switch the state of the portable terminal 100 to the reception-disabled state without depending on whether the predetermined APP is operating. In this case, when the navigation APP does not operate but the portable terminal 100 exists in the dock 30, the control device 1 inhibits the reception of the operator's operation input to the home button 2.

By employing this configuration, the portable terminal 100 can nullify the home button 2 by software when it is detected at the OS level that the portable terminal exists at the predetermined position in the vehicle interior.

It is possible to prevent the navigation APP from being stopped even when the operator performs the operation input to the home button 2 while the portable terminal 100 executes the navigation APP in a state in which the portable terminal 100 is attached to the dock 30. It is also possible to prevent the navigation screen display from being switched to an initial screen.

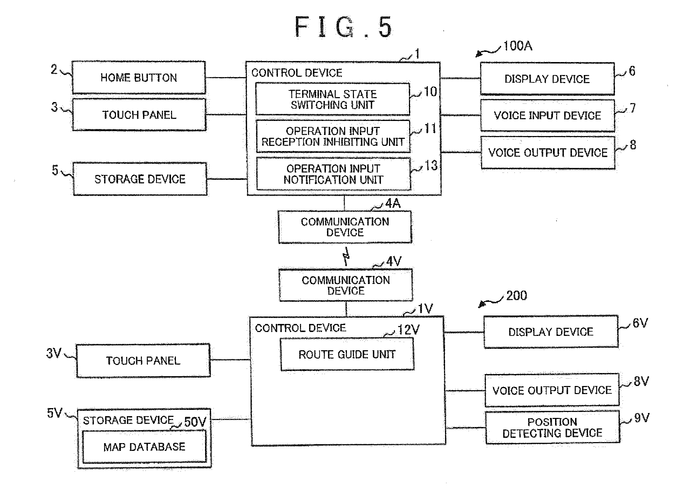

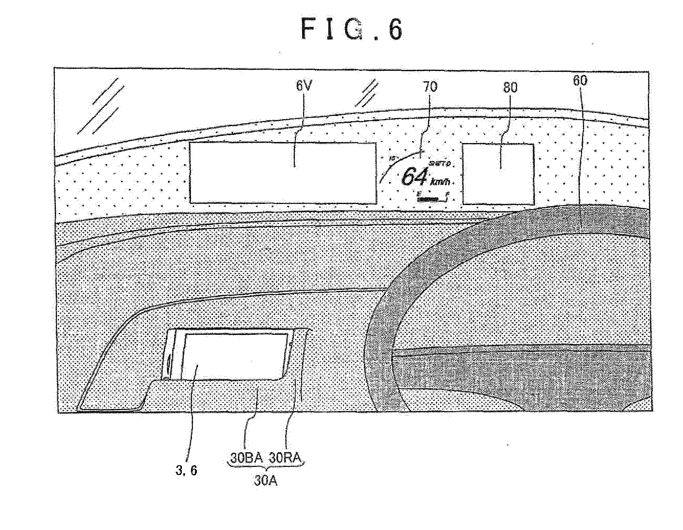

Another portable terminal 100A according to the embodiment of the invention will be described below with reference to FIGS. 5 and 6. FIG. 5 is a functional block diagram illustrating a configuration example of the portable terminal 100A. FIG 6 is a diagram illustrating a vehicle interior when the portable terminal 100A is attached to a cradle (dock) 30A on the dashboard.

The portable terminal 100A is different from the portable terminal 100 illustrated in FIG. 1, in that it includes a communication device 4A serving as the existence position detecting device, the position detecting device 9, the route guide unit 12, and the map database 50 are removed, and the control device 1 includes an operation input notifying unit 13, and both are otherwise equivalent to each other. Accordingly, common elements will be referenced by the same reference numerals as illustrated in FIG. 1, description thereof will not be repeated, and differences therebetween will be described below in detail.

The communication device 4A is a device for controlling communication with an onboard device 200. In this embodiment, the communication device 4A is coupled to a communication device 4V of the onboard device 200 via near-field communication (hereinafter, referred to as "NFC"). Wireless communication using Bluetooth (registered trademark), Wi-Fi (registered trademark), or the like or wired communication using a universal serial bus (USB) or the like may be used for the communication between the communication device 4A and the communication device 4V.

In this embodiment, the communication device 4A periodically transmits a response request signal. The communication device 4V returns a response signal to the communication device 4A when the response request signal is received. Then, the communication device 4A sets up wireless communication with the communication device 4V when the response signal is received. The communication device 4V may periodically transmit the response request signal or each of the communication device 4A and the communication device 4V may periodically transmit the response request signal.

When the wireless communication with the communication device 4V is set up, the communication device 4A detects that the portable terminal 100A exists in the dock 30A and outputs the detection result to the control device 1.

The onboard device 200 is, for example, an onboard navigation device and includes a control device 1V including a route guide unit 12V, a touch panel 3V, a storage device 5V storing a map database 50V, a display device 6V as an onboard display, a voice output device 8V, and a position detecting device 9V. The elements are the same as the elements described with reference to FIG. 1 and description thereof will not be repeated.

The operation input notifying unit 13 is a functional element for notifying the onboard device 200 of details of the operator's operation input to the operation input device of the portable terminal 100A. In this embodiment, the operation input notifying unit 13 executes the touch gesture recognition APP and notifies the onboard device 200 of details of the operator's operation input to the touch panel 3. Specifically, the operation input notifying unit 13 transmits details of the operator's operation input to the touch panel 3 to the navigation APP that is executed by the onboard device 200. The navigation APP that is executed by the onboard device 200 is an APP for controlling the screen displayed on the display device 6V.

The route guide unit 12V of the onboard device 200 that executes the navigation APP receives information on the details of the operation input from the operation input notifying unit 13 and performs a function corresponding to the received information. For example, the function corresponding to the received information includes as enlargement or reduction in display of a map image displayed on the display device 6V and screen scrolling.

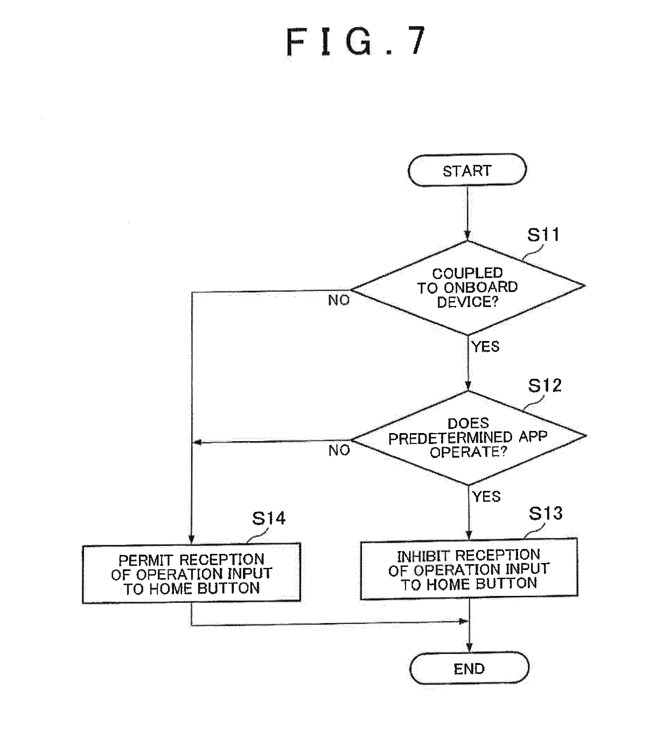

A process (hereinafter, referred to as "second operation input reception inhibiting process") of causing the portable terminal 100A to inhibit reception of the operator's operation input to a predetermined operation input device will be described below with reference to FIG. 7. FIG. 7 is a flowchart illustrating a flow of the second operation input reception inhibiting process. The portable device 100A repeatedly performs the second operation input reception inhibiting process for each predetermined cycle.

First, the control device 1 of the portable terminal 100A determines whether the portable terminal 100A is coupled to the onboard device 200 (step S11). In this embodiment, the control device 1 determines that the portable terminal 100A is coupled to the onboard device 200 when the communication device 4A of the portable terminal 100A sets up wireless communication by NFC with the communication device 4V of the onboard device 200. On the other hand, when the wireless communication by NFC is not set up, the control device 1 determines that the portable terminal 100A is not coupled to the onboard device 200.

FIG. 6 is a diagram illustrating a state in which the portable terminal 100A is attached to the dock 30A. FIG. 6 illustrates a state in which the portable terminal 100A is supported at a predetermined position by a lower guide portion 30BA and a right guide portion 30RA of the dock 30A. The lower guide portion 30BA and the right guide portion 30RA are formed of, for example, a resin material. Preferably, the lower guide portion 30BA and the right guide portion 30RA are formed of the same material as the dashboard. The lower guide portion 30BA and the right guide portion 30RA may be formed so as to be integrated with the dashboard. The portable terminal 100A is attached to the dock 30A by causing the left side portion thereof to slide along an inner guide groove (not illustrated) in the lower guide portion 30BA from the left side of the dock 30A.

The portable terminal 100A is supported by the dock 30A in a state in which the touch panel 3 and the display device 6 thereof face a driver side. The portable terminal 100A is supported by the dock 30A in a transversely-mounted state, that is, in a state in which the long sides thereof are transverse. The right guide portion 30RA is configured to satisfactorily support the portable terminal 100A and to expose the touch panel 3 and the display device 6 as much as possible. In this embodiment, the right guide portion 30RA extends along the short sides of the portable terminal 100A up to a height of 2/3 of the short sides so as not to cover the touch panel 3 and the display device 6. In this case, the home button 2 is covered with the right guide portion 30RA and cannot be pushed by the driver. The home button 2 may be exposed in a stat in which the portable terminal 100A is supported by the dock 30A.

The dock 30A may include a locking mechanism (not illustrated) such as a snap-fit mechanism that can prevent the portable terminal 100A from being dropped or detached during traveling and that can easily detach the portable terminal 100A from the dock 30A at the time of getting off the vehicle. The dock 30A may have a function f preventing the portable terminal 100A from being attached in an inverted state in the vertical direction of the horizontal direction. For example, the dock 30A may be a shape-adaptable type that accepts only the portable terminal 100A facing a predetermined direction and does not accept the portable terminal 100A facing the other directions.

By employing this configuration, the driver can stretch the hand grasping a steering wheel 60 and can perform an operation input to the touch panel 3. The driver can visually recognize the display device 6V displaying navigation information, a speedometer 70, and a multi-information display 80 displaying a communication state of the portable terminal 100A, a battery state, and the like, if necessary, during driving. FIG. 6 illustrates a state in which an image of a touch pad which is a screen for the touch gesture recognition APP is displayed on the display device 6 of the portable terminal 100A. Here, the portable terminal 100A may stop the screen display on the display device 6 when the portable terminal is coupled to the onboard device 200, that is, when the portable terminal is attached to the dock 30A.

When it is determined that the portable terminal 100A is coupled to the onboard device 200 (YES in step S11), the control device 1 determines whether a predetermined APP is operating in the portable terminal 100A (step S12). In this embodiment, the control device 1 determines whether the touch gesture recognition APP is operating in the portable terminal 100A. FIG. 6 illustrates a state in which the touch gesture recognition APP is operating in the portable terminal 100A.

When it is determined that the predetermined APP is operating (YES in step S12), the terminal state switching unit 10 switches the state of the portable terminal 100A to the reception-disabled state, that is, the state in which the operator's operation input to the home button 2 is not received (step S13). In this case, the operation input reception inhibiting unit 11 inhibits execution of the predetermined function corresponding to the home button 2 even when the home button 2 is pushed.

On the other hand, when it is determined that the predetermined APP does not operate (NO in step S12), the terminal state switching unit 10 switches the sate of the portable terminal 100A to the reception-enabled state, that is, the state in which the operator's operation input to the home button 2 is received (step S14). In this case, the operation input reception inhibiting unit 11 permits execution of the predetermined function corresponding to the home button 2 when the home button 2 is pushed. The terminal state switching unit 10 maintains the reception-enabled state when the state of the portable terminal 100A is already the reception-enabled state.

When it is determined that the portable terminal 100A is not coupled to the onboard device 200 (NO in step S11), the control device 1 similarly switches the state of the portable terminal 100A to the reception-enabled state (step S14). In this case, the terminal state switching unit 10 maintains the reception-enabled state when the state of the portable terminal 100A is already the reception-enabled state.

The order of step S11 and step S12 is not limited and the control device 1 may determine whether the portable terminal 100A is coupled to the onboard device 200 after determining that the predetermined APP is operating, or may simultaneously perform two determinations.

When it is determined that the portable terminal 100A is coupled to the onboard device 200, the control device 1 may switch the state of the portable terminal 100A to the reception-disabled state without depending on whether the predetermined APP is operating. In this case, when the navigation APP does not operate but the portable terminal 100A is coupled to the onboard device 200, the control device 1 inhibits the reception of the operator's operation input to the home button 2.

By employing this configuration, the portable terminal 100A can nullify the home button 2 by software when it is detected at the OS level that the portable terminal 100A is coupled to the onboard device 200.

It is possible to prevent the touch gesture recognition APP from being stopped even when the operator performs the operation input to the home button 2 while the portable terminal 100A executes the touch gesture recognition APP in a state in which the portable terminal is attached to the dock 30A. It is also possible to prevent the touch gesture recognition screen display form being switched to an initial screen.

The portable terminal 100A may perform route guidance using the route guide unit thereof. In this case, the portable terminal 100A may use either of the map database stored in the storage device 5 and the map database 50V stored in the storage device 5V of the onboard device 200, or may use either of the output of the position detecting device thereof and the output of the position detecting device 9V of the onboard device 200.

While an exemplary embodiment of the invention has been described above in detail, the invention is not limited to the aforementioned embodiment but various modifications and replacements may be added to the aforementioned embodiment without departing from the scope of the invention.

### REFERRENCE SIGNS LIST

1: control device
2: home button
3, 3V: touch panel
4: existence position detecting device
4A, 4V: communication device
5, 5V: storage device
6, 6V: display device
7: sound input device
8, 8V: sound output device
9, 9V: position detecting device
10: terminal state switching unit
11: operation input reception inhibiting unit
12, 12V: route guide unit
13: operation input notifying unit
30, 30A: dock
30BA: lower guide portion
30L: left guide portion
30R, 30RA: right guide portion
50, 50V: map database
60: steering wheel
70: speedometer
80: multi-information display
100, 100A: portable terminal
200: onboard device.

## Claims

1. A portable terminal comprising:
a control device that inhibits reception of an operator's operation input to a home button until coupling to an onboard device is intercepted when the portable terminal is coupled to the onboard device and predetermined application software is operating.

2. The portable terminal according to claim 1, wherein the predetermined application software transmits details of the operator's operation input to a touch panel of the portable terminal to application software that is operating in the onboard device so as to control a screen displayed on an onboard display.

3. The portable terminal according to claim 2, wherein the portable terminal is coupled to the onboard device by near-field communication.

4. A control method of a portable terminal, comprising:
a step of inhibiting reception of an operator's operation input to a home button until coupling of the portable terminal to an onboard device is intercepted when the portable terminal is coupled to the onboard device and predetermined application software is operating in the portable terminal.

5. A program, which is executed in a portable terminal, causing a computer to execute a step of:
inhibiting reception of an operator's operation input to a home button until coupling of the portable terminal to an onboard device is intercepted when the portable terminal is coupled to the onboard device and predetermined application software is operating in the portable terminal.

6. A cradle for a portable terminal, which is disposed in a vehicle interior, comprising:
a guide portion that covers a home button of the portable terminal when the portable terminal is attached to the cradle.

7. The cradle for a portable terminal according to claim 6, wherein the guide part extends to a height of about 3/2 of a short side of the portable terminal along the short side when the portable terminal is transversely attached to the cradle.
